# EUROPÄISCHE PATENTSCHRIFT

(11) **EP 3 318 371 B1**
(45) Veröffentlichungstag und Bekanntmachung des Hinweises auf die Patenterteilung: **28.07.2021**
(21) Anmeldenummer: 16197295.5
(22) Anmeldetag: 04.11.2016
(51) Int. Cl.: B25J 15/00, B65G 47/90, B65G 61/00, B25J 15/02

(54) **ROBOTERGREIFER, PALETTIERSTATION MIT EINEM ROBOTERGREIFER UND BETRIEBSVERFAHREN FÜR EINEN ROBOTERGREIFER**
ROBOT GRIPPER, PALLETTING STATION WITH A ROBOT GRIPPER AND METHOD OF OPERATION FOR A ROBOT GRIPPER
PINCE DE ROBOT, POSTE DE MISE SUR PALETTES AVEC UNE PINCE DE ROBOT ET PROCÉDÉ DE FONCTIONNEMENT D'UNE PINCE DE ROBOT

(43) Veröffentlichungstag der Anmeldung: 09.05.2018
(73) Patentinhaber: IPR-Intelligente Peripherien für Roboter GmbH, 75031 Eppingen (DE)
(72) Erfinder: Walter, Gerald, 74834 Elztal (DE)
(74) Vertreter: Patentanwaltskanzlei Cartagena

(56) Entgegenhaltungen:
- WO-A1-2015/153697
- DE-A1-102014 211 397
- DE-U1-202013 001 558
- US-A1- 2012 070 263

## Beschreibung

### ANWENDUNGSGEBIET UND STAND DER TECHNIK

Die Erfindung betrifft einen Robotergreifer zum Ergreifen, Transportieren und Ablegen von Transportgütern nach dem Oberbegriff von Anspruch 1, insbesondere zum Bestücken von Paletten mit Transportgütern unterschiedlicher Außenmaße. Die Erfindung betrifft weiterhin eine Palettierstation mit einem solchen Robotergreifer sowie ein Betriebsverfahren für einen solchen Robotergreifer.

Aus dem Stand der Technik sind vielfältige Robotergreifer bekannt, um Transportgut verschiedener Art handhaben zu können, also aufnehmen, sicher transportieren und ablegen zu können.

Insbesondere im Bereich des so genannten Palettierens mit unterschiedlichen Gütern, also Bestückens einer Palette mit unterschiedlichen Gütern, stellt sich eine besondere Problematik dadurch, dass die Zieloberfläche mitunter nicht horizontal und/oder nicht eben ist, da bereits untere Lagen auf der Palette aus unterschiedlichen Gütern mit unterschiedlichen oder nicht-rechtwinkligen Außenmaßen aufgebaut sind. Solche Paletten mit unterschiedlichen Gütern finden beispielsweise zur Belieferung von Tankstellen oder anderweitigen Geschäften Verwendung, deren Liefermenge nicht für sortenreine Paletten ausreicht.

Aus der US 2012/070263 A1 ist bereits ein Greifer für solche Zwecke bekannt. Der Aufbau dieses Greifers sieht vor, dass mehrere Gabelzinken gegenüber der Greiferbasis jeweils in einer Hochrichtung und einer Längsrichtung verlagerbar sind, so dass ein Ablegen von Transportgütern auf den Gabelzinken erfolgen kann, indem die Gabelzinken gleichsam unter dem Transportgut herausgezogen werden.

Es hat sich jedoch gezeigt, dass es bei einem solchen Greifer schwierig ist, ihn für hohe Traglasten auszulegen, da die Transportgüter auf Gabelzinken aufliegen, die mittelbar über zwei oder sogar drei Führungen, eine vertikale und eine oder zwei horizontale, an der Greiferbasis angebunden sind. Dies macht aufgrund der durch die Traglast verursachten Momentenbeaufschlagung vergleichsweise voluminöse Führungen erforderlich, wenn der Robotergreifer vergleichsweise schwere Traglasten handhaben soll, wie beispielsweise mehrere Gebinde von 1-Liter-Getränkeflaschen.

Weitere Dokumente des Standes der Technik, die im Kontext der vorliegenden Erfindung zu nennen sind, sind die Dokumente WO 2015/153697 A1, DE 102014211397 A1 und DE 202013001558 U1.

Aus der WO 2015/153697 A1 ist eine autonome Vorrichtung zum Be- und Entladen bekannt, umfassend einen mobilen Körper, einen Roboterarm, der mit dem mobilen Körper gekoppelt ist, um Artikel zu laden und zu entladen, ein an dem beweglichen Körper angebrachtes Körperfördersystem zum Fördern von Kartons und einen Manipulator, der an einem beweglichen Ende des Roboterarms angebracht, wobei der Manipulator zum Aufnehmen einer Reihe von Gegenständen an einer ersten Stelle und zum Ablegen der Reihe von Gegenständen an einer zweiten Stelle dient. De Manipulator verfügt über Saugnäpfe zur horizontalen Verlagerung eines Gegenstands.

Aus der DE 102014211397 A1 beschriebt einen Roboter zur Handhabung von Transportgütern, insbesondere zur Zusammenstellung von Transportgütern zu einer gemeinsamen Liefercharge auf einer Palette, mit mindestens einer beweglichen Zinkeneinheit mit mindestens einem Auflagezinken und mindestens einer Zinkenbasis, gegenüber der der mindestens eine Auflagezinken translativ verfahrbar ist.

Aus der DE 202013001558 U1 ist eine Vorrichtung zum Aufnehmen horizontal gelagerter Kommissionsware beim Vorgang des Palettierens bzw. Depalettierens mittels eines Zweiachs-Greifers der über einen Schwenkkopf von einem Mehrachs- Roboter geführt wird, bekannt. Die Vorrichtung verfügt über einen Hauptträger-Rahmen am Schwenkkopf, der an seiner Unterseite Schienen für die horizontale Verfahrbarkeit einer an einem Trägerrahmen angeordneten Lastgabel mit mehreren Gabelzinken trägt. Die Vorrichtung verfügt weiterhin über eine Haltegabel-Traverse mit Führungselementen für die vertikale Verfahrbarkeit einer Haltegabel mit mehreren Gabelzinken sowie eine im oberen Bereich des Trägerrahmens angeordneten Baueinheit mit einem Antrieb für den Lastgabel-Schiebeschlitten.

### AUFGABE UND LÖSUNG

Aufgabe der Erfindung ist es, einen Robotergreifer und ein Verfahren für seinen Betrieb zur Verfügung zu stellen, durch den ein Greifer zur Verfügung gestellt wird, der bei technisch unaufwändigem Aufbau das Tragen hoher Lasten ermöglicht.

Die der Erfindung zugrunde liegende Aufgabe wird durch einen Robotergreifer nach Anspruch 1, sowie durch ein Verfahren nach Anspruch 7 gelöst.

Dieser Robotergreifer verfügt über eine Greiferbasis mit einer Kopplungseinrichtung zur Anbringung an einem Roboterarm, so dass die Greiferbasis gemeinsam mit der Kopplungseinrichtung durch den Roboterarm beweglich ist. An der Greiferbasis sind mindestens zwei Gabeleinheiten vorgesehen, die jeweils über einen Gabelzinken verfügen.

Die mindestens zwei Gabelzinken erstrecken sich in einer Längsrichtung parallel zueinander von der Greiferbasis weg und sind bezogen auf die Längsrichtung ortsfest zur Greiferbasis vorgesehen, also in Längsrichtung nicht verfahrbar. Die Verlagerung der Gabelzinken in Längsrichtung ist daher nur durch den Robotergreifer als Ganzem möglich.

An den Gabelzinken sind Auflageflächen zur unmittelbaren Auflage der Transportgüter vorgesehen. Die Gabelzinken erstrecken sich unterhalb der Auflageflächen und nehmen die Gewichtskraft des Transportgutes auf. Die an ihnen vorgesehenen Auflageflächen können ortsfest an den Oberseiten der Gabelzinken vorgesehen sein oder oberhalb der Oberseiten und in Längsrichtung beweglich zu den Oberseiten der Gabelzinken vorgesehen sein. Die Gabelzinken und die Auflageflächen sind vorzugsweise in zwei, drei oder mehr Teilzinken untergliedert, die in Querrichtung voneinander beabstandet sind. Dies erhöht die Flexibilität der Gabelzinke beim Aufnehmen des Transportgutes, wie im Weiteren noch beschrieben ist.

Es ist weiterhin vorgesehen, dass die mindestens zwei Gabelzinken unabhängig voneinander gegenüber dem Greiferbasis in einer Hochrichtung verfahrbar sind.

Im Kontext dieser Beschreibung der Erfindung sind die Raumrichtungen der Hochrichtung (Z), der Längsrichtung (Y) und der Querrichtung (X) als Raumrichtungen bezogen auf die Ausrichtung des Robotergreifers zu verstehen und bewegen sich demnach mit diesem mit. Die genannten Raumrichtungen stehen in rechten Winkeln zueinander. Die Hochrichtung ist durch jene Richtung definiert, in der Gabelzinken eines erfindungsgemäßen Robotergreifers zum Anheben und Absenken des Transportgutes verfahrbar sind. Die Längsrichtung ist jene Richtung, die der Haupterstreckungsrichtung der Gabelzinken entspricht. Die Querrichtung ist jene Richtung, die orthogonal zur Hochrichtung und zur Längsrichtung ausgerichtet ist.

Der erfindungsgemäße Greifer ist ein Robotergreifer, also ein Greifer, der bestimmungsgemäße an einen Roboterarm oder Roboterausleger angebracht wird, der seinerseits automatisiert beweglich ist. Als eine solcher Roboter mit Roboterarm oder Roboterausleger kommen beispielsweise klassische Industrieroboter und Portale in Frage. Ein zu verwendender Roboter sollte möglichst zumindest eine translative Beweglichkeit des Robotergreifers in dessen Hochrichtung und Längsrichtung gestatten.

Der erfindungsgemäße Greifer gestattet es, eines oder mehrere Transportgutstücke in Abhängigkeit der Zielfläche bezüglich der jeweiligen Bodenhöhe anzupassen. Damit ist es möglich, ein einzelnes Transportgutstück entsprechend der Zielfläche bereits vor dem Ablegen in eine schräge Lage zu bringen. Vor allem aber können mehrere, gleichzeitig beförderte Transportgutstücke auf unterschiedliche Höhen verlagert werden, die relativ zueinander der jeweiligen Höhe der Zielfläche entsprechen. Dies wird durch die höhenverlagerbaren Gabelzinken ermöglicht.

Die Gabelzinken befinden sich unterhalb der Auflagefläche, so dass die Gewichtskraft in die Gabelzinken eingekoppelt wird. Dadurch, dass die Gabelzinken in Längsrichtung ortsfest zur Greiferbasis angeordnet sind, ist zwischen der Greiferbasis der der Gabelzinke nur eine Führung erforderlich oder es sind im Falle einer zusätzlichen Verlagerbarkeit in Querrichtung zwei Führungen erforderlich. Es ist daher ein vergleichsweise einfacher und wartungsarmer Aufbau möglich.

Zu Realisierung der Verlagerbarkeit der Gabelzinken in Hochrichtung ist vorzugsweise eine Führung mit einer in Hochrichtung erstreckten Führungsschiene vorgesehen, entlang derer ein Führungsschlitten verfahrbar ist. Vorzugsweise ist die Führungsschiene auf Seiten der Greiferbasis vorgesehen und somit in Hochrichtung ortsfest, während der Führungsschlitten vorzugsweise in Hochrichtung demgegenüber verfahrbar ist, beispielsweise mittels eines elektrisch angetriebenen Spindeltriebs, um die in Hochrichtung ortsfest zum Führungsschlitten bewegliche Gabelzinke zu verfahren.

Zum Zweck des Ablegens von auf der Auflagefläche aufliegendem Transportgut werden Schieber verwendet.

Solche Schieber sind an den mindestens zwei Gabeleinheiten in Hochrichtung oberhalb der jeweiligen Gabelzinke vorgesehen. Die Schieber weisen jeweils eine in Längsrichtung zu einem distalen Ende der jeweiligen Gabelzinke weisenden Druckfläche auf und sind unabhängig voneinander in Längsrichtung verlagerbar.

Diese Schieber sind in Längsrichtung und somit parallel zur Auflagefläche unabhängig voneinander gesteuert verlagerbar. Die Schieber dienen dem Zweck der Verlagerung des Transportgutes auf den

Auflageflächen. Die Schieber können beispielsweise über von einem Getriebemotor angetriebene Zahnstangen verlagert werden.

Die Schieber finden insbesondere Verwendung, um das Transportgut oder die mehreren Transportgutstücke auf der Zielfläche abzulegen. Das Verfahren der Schieber und ihrer Druckflächen erfolgt vorzugsweise zeitgleich mit einer gegenläufigen Bewegung des Robotergreifers als Ganzem, so dass bezogen auf die Längsrichtung die Transportgutstücke während des Ablegens in etwa eine gleichbleibende Position bezogen auf die Zielfläche bewahren.

Die Druckflächen können als größere plane Flächen ausgebildet sein. Je nach Transportgut können jedoch auch kleinere Druckflächen oder an das Transportgut angepasst geformte Druckflächen zweckmäßig sein. Die Druckflächen sind vorzugsweise mit einer weichen Kontaktschicht versehen, um das Transportgut beim Ablegen nicht zu beschädigen.

Ein erfindungsgemäßer Robotergreifer verfügt an einigen oder allen Gabeleinheiten über jeweils einen Niederhalter, der in Hochrichtung gegenüber der Gabelzinke verfahrbar ist und der eine zur Gabelzinke weisende Niederhalterfläche aufweist, mittels derer das Transportgut bei einer Bewegung des Robotergreifers fixiert werden kann.

Der Niederhalter ist motorisch in Hochrichtung verfahrbar und drückt während der Handhabung der Transportgutes von oben gegen das Transportgut. Im derart zwischen der Auflagefläche und der Niederhalterfläche gehaltenen Zustand droht das Transportgut auch bei schnellen Bewegungen des Robotergreifer als Ganzes nicht, von der Auflagefläche herunterzufallen. Je nach Ausgestaltung des Niederhalters kann auch während des Abladens die Fixierung mittels Niederhalter fortgesetzt werden.

Des Weiteren dient der Niederhalter der Gewährleistung einer definierten Position des Transportgutes, damit die durch eine Robotersteuerung in Abhängigkeit von Sensordaten festgelegten Bewegungsabläufe und -pfade keine Kollisionen verursachen.

Bei der Gestaltung des Robotergreifers mit einem Niederhalter und einem Schieber je Gabeleinheit, ist vorgesehen, dass der Niederhalter mit dem Schieber in der nachfolgend erläuterten Art kombiniert ist.

Der Niederhalter ist lediglich in Hochrichtung gegenüber der Gabelzinke beweglich und der Schieber ist mittels einer in Längsrichtung ausgerichteten Führung am Niederhalter geführt in Längsrichtung verlagerbar ist, so dass der Schieber und Niederhalterfläche gemeinsam in Hochrichtung verlagerbar sind, die Niederhalterfläche in Längsrichtung ortsfest zur Greiferbasis verbleibt und der Schieber gegenüber der Niederhalterfläche in Längsrichtung verlagerbar ist. Hierdurch wird eine Höhen verstellbarkeit des Schiebers gegenüber der Auflagefläche erzielt, ohne dass hierfür ein weiterer Motor erforderlich ist. Stattdessen dient die Verlagerbarkeit des Niederhalters in Hochrichtung gegenüber der Gabelzinke und der Auflagefläche auch der Verlagerbarkeit des Schiebers in Hochrichtung.

Durch die Verwendung von drei oder mehr Gabelzinken, insbesondere fünf oder mehr Gabelzinken, wird die Möglichkeit geschaffen, eine ganz Lage einer zu bestückenden Palette oder einen erheblichen Teil hiervon in einem Zug oder in wenigen Zügen auf die zu bestückenden Palette abzuladen. Hierdurch lassen sich kurze Taktzeiten erzielen.

Weiterhin sind vorzugsweise die mindestens zwei Gabelzinken in einer Querrichtung gegeneinander verfahrbar. Hierdurch ergibt sich eine größere Flexibilität bei unterschiedlichen Arten von Transportgütern. Bei bezogen auf die Querrichtung breite Transportgutstücken können die Gabeleinheiten in Querrichtung weiter voneinander beabstandet sein als bei kleinteiligeren Transportgütern.

Das Ergreifen des Transportgutes erfolgt vorzugsweise von einer Sammelstation, die insbesondere eine Sammelfläche aufweisen kann, die durch eine Vielzahl von Einschubkanälen für die einzelnen Gabelzinken unterbrochen ist. So kann der Roboter die Gabelzinken des Robotergreifers unterhalb der aufzunehmenden Transportgutstücke in Längsrichtung eintauchen lassen, um anschließend durch vertikale Verlagerung diese Transportgutstücke anzuheben.

Möglich ist auch die eingangs bereits erwähnte Gestaltung mit Gabelzinken, die zusätzlich in Längsrichtung erstreckte Durchbrechungen aufweisen. Diese gestatten es, dass eine Gabelzinke in zwei oder mehr solche Einschubkanäle der Sammelstation eintaucht, um das Transportgut von dort aus anzuheben. Durch die Teilung der Gabelzinken ist es daher möglich, die Gabelzinken bezogen auf die Querrichtung besonders bedarfsgerecht vor dem Anheben zu positionieren.

Die Erfindung betrifft auch eine Palettierstation, an der unterschiedliche Waren zu einer Palette gebündelt werden. Diese Palettierstation weist neben einer Sammelstation, die vorzugsweise in oben beschriebener Art ausgestaltet ist, eine Zielpalette auf, auf die die Transportgutstücke aufzuladen sind. Der Transport von der Sammelstation zur Zielpalette erfolgt mittels eines Robotergreifers oben beschriebener Art.

Die Erfindung umfasst darüber hinaus auch ein Betriebsverfahren für den beschriebenen Robotergreifer. Hierbei fährt der Robotergreifer mit mindestens zwei Gabelzinken unter mindestens zwei Transportgutstücke und hebt die Transportgutstücke dann gemeinsam an. Anschließend wird mindestens eine Gabelzinke in Hochrichtung gegenüber der Greiferbasis verlagert, so dass die Gabelzinken anschließend relativ zur Greiferbasis auf unterschiedlicher Höhe angeordnet sind. In dieser Relativstellung wird der Robotergreifer an die Zielfläche oder Zielpalette herangefahren. Dort werden dann die Transportgutstücke abgeladen, wobei dies vorzugsweise gleichzeitig oder zumindest zeitlich überlappend erfolgt.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 und 2 zeigen einen Robotergreifer und eine seiner Gabeleinheiten in einer nicht von der Erfindung umfassten Ausgestaltung.
Fig. 3 und 4 zeigen die Gabeleinheit in erfindungsgemäßer Ausgestaltung.
Fig. 5 und 6 zeigen die Gabeleinheit einer nicht von der Erfindung umfassten Ausgestaltung.
Fig. 7 und 8 zeigen die Gabeleinheit einer weiteren nicht von der Erfindung umfassten Ausgestaltung.
Fig. 9A bis 9E zeigen exemplarisch den Vorgang des Palettierens mit einem Robotergreifer in einer nicht von der Erfindung umfassten Ausgestaltung gemäß den Fig. 1 und 2.

### DETAILLIERTE BESCHREIBUNG DERAUSFÜHRUNGSBEISPIELE

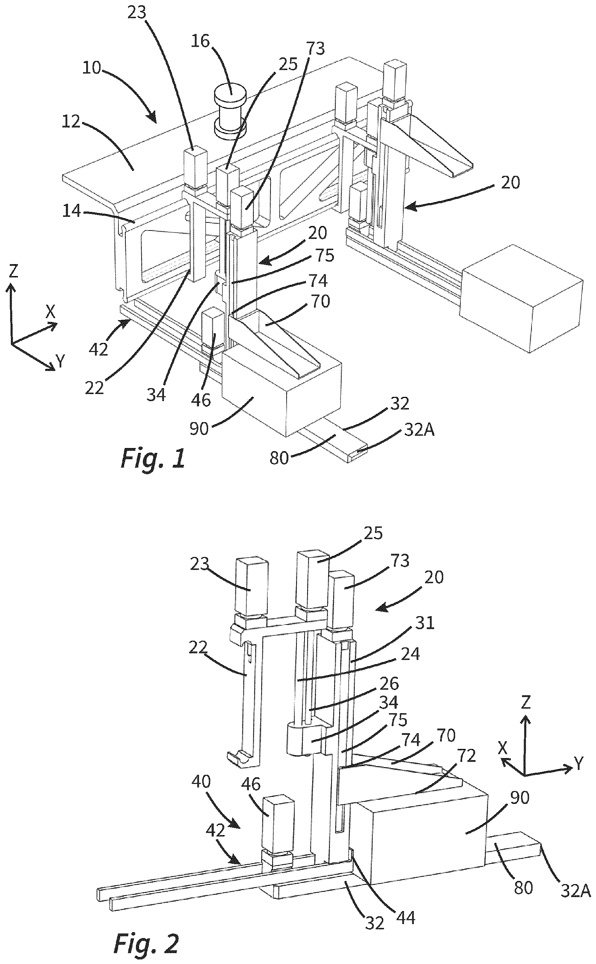

Fig. 1 zeigt einen Robotergreifer 10. Die an diesem Robotergreifer dargestellten Gabeleinheiten sind nicht von der Erfindung umfasst. Die Darstellung des Robotergreifers erfolgt lediglich zu Erläuterungszwecken.

Der Robotergreifer 10 ist zur Befestigung an einen Roboterarm vorgesehen und verfügt hierfür über eine als Verbindungsflansch ausgestaltete Kopplungseinrichtung 16, welcher an einer Greiferbasis 12 angebracht ist. Die Position der Greiferbasis 12 im Raum wird also unmittelbar und einzig durch den Roboterarm gesteuert.

Der Robotergreifer 10 verfügt über mehrere Gabeleinheiten 20, wobei in der Darstellung der Fig. 1 zum Zwecke der Übersichtlichkeit nur zwei Gabeleinheiten dargestellt sind. Die dargestellten Gabeleinheiten sind nicht von der Erfindung umfasst. Die Gabeleinheiten 20 sind an der Greiferbasis 12 mittels einer in Querrichtung erstreckten Führung 14 und einen gabeleinheitsseitigen Querbewegungs-Schlitten 22 geführt, so dass ihr Abstand zueinander motorisch über einen Getriebemotor 23 möglich ist.

Jede Gabeleinheit 20 verfügt über eine Zinkeneinheiten 30, welche als Hauptbestandteile eine Gabelzinke 32 aufweist, die sich in Längsrichtung Y erstreckt. Die Zinkeneinheit 30 ist als Ganzes gegenüber dem Querbewegungs-Schlitten 22 in Hochrichtung Z verfahrbar. Hierfür ist ein Querbewegungs-Schlitten 22 eine Führungsschiene 24 vorgesehen, auf der eine manschettenartigen Führungsschlitten 34 geführt ist, der Teil der Zinkeneinheit 30 ist. Die Verlagerung in Hochrichtung Z erfolgt über einen Getriebemotor 25 und eine Spindel 26, die mit einer nicht dargestellten Spindelmutter innerhalb des Führungsschlittens 34 zusammenwirkt.

Die Zinkeneinheit 30 umfasst eine vertikal ausgerichtete Führungssäule 31 und die bereits erwähnte Gabelzinke 32, wobei diese fest miteinander verbunden sind und gemeinsam gegenüber der Greiferbasis 12 lediglich in Hochrichtung Z verlagert werden können. Die Gabelzinke 32 dient der Aufnahme der Gewichtslast von zu transportierenden Transportgutstücken 90. Ihre Oberseite bildet zu diesem Zweck eine Auflagefläche 80. Vorliegend ist jede Gabelzinke durch Durchbrechungen in drei Einzelfinger 33 untergliedert. Der Zweck dessen ist im Weiteren noch erläutert.

Die Gabeleinheit 20 umfasst weiterhin einen Schiebereinrichtung 40, umfassend einen Getriebemotor 46 zum Antreiben eines Schiebers 42, an dessen distalem Ende eine Druckfläche 44 vorgesehen ist. Der Schieber 42 ist in festem Anstand oberhalb der Auflagefläche 80 vorgesehen und angetrieben durch den Getriebemotor 46 in LängsrichtungYverfahrbar.

Weiterhin umfasst die Gabeleinheit 20 einen Niederhalter 70, der oberhalb der Gabelzinke 32 angeordnet ist. An der Unterseite des Niederhalters 70 ist eine Niederhalterfläche 72 vorgesehen, die nach unten ausgerichtet ist. Der Niederhalter 70 ist mittels einer Führungsschiene einer Niederhalterführung 75 und eines Niederhalterschlittens 74 in Hochrichtung verfahrbar, wobei dies über einen eigenen als Niederhaltermotor agierenden Getriebemotor 73 gesteuert wird. Der Niederhalter 70 wird bestimmungsgemäß abgesenkt, um von oben auf das Transportgut 90 zu drücken und somit eine Fixierung auch bei schnellen und ruckhaften Bewegungen des Robotergreifers 10 zu ermöglichen.

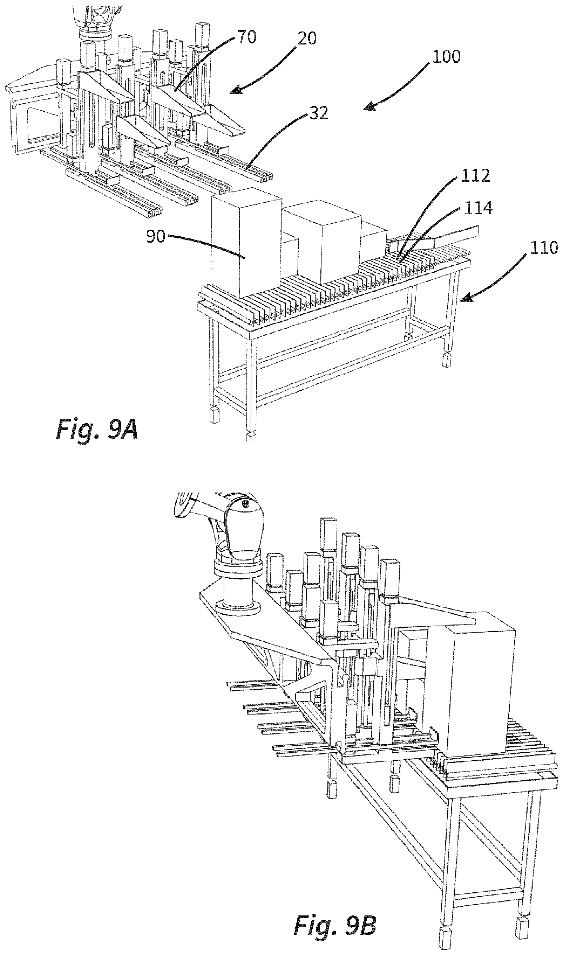

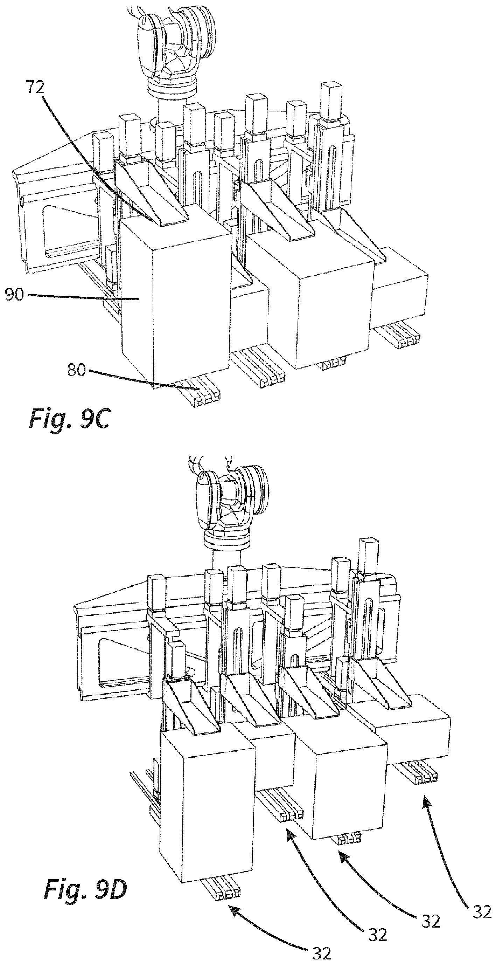

Die bestimmungsgemäße Verwendung, die im Weiteren zu den Fig. 9A bis 9E noch näher erläutert wird, sieht vor, dass Transportstücke ergriffen werden, indem der Robotergreifer 10 die zu diesem Zeitpunkt auf gleicher Höhe und in Querrichtung X in fallweise angepassten Abstand zueinander befindlichen Gabelzinken 32 unter das Transportgut schiebt und anschließend mittels der Gabelzinken 32 anhebt. Die Transportgutstücke 90 werden dann mittels der Niederhalter 70 an die Auflagefläche 80 angedrückt, während der Robotergreifer 10 zum Ablageziel verfahren wird. Vor dem Ablegen werden die Gabelzinken 32 bezüglich ihrer Höhe gegenüber der Greiferbasis 12 angepasst und dann mittels der Schieber 42 von den Auflageflächen heruntergeschoben.

Bei den weiteren Ausgestaltungen bezeichnen gleiche Bezugszeichen Elemente, die funktional äquivalent zu denen der Figuren 1 und 2 sind. Soweit Unterschiede bestehen, sind diese im Weiteren erläutert.

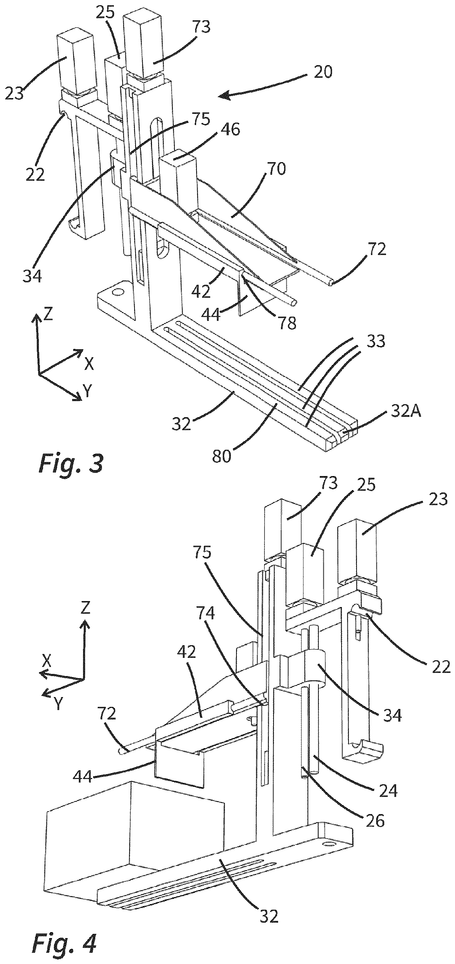

Bei der erfindungsgemäßen Ausgestaltung gemäß den Figuren 3 und 4 finden andere Gabeleinheiten 20 Verwendung. Diese unterscheiden sich von den Gabeleinheiten gemäß Fig. 1 und 2 dadurch, dass die Schieber 42 mittels Führungen 78 geführt gegenüber den Niederhaltern 70 beweglich sind. Die Höhe der Schieber 42 relativ zu den Gabelzinken 32 ist somit einstellbar, wobei dies über den Getriebemotor 73 erfolgt. Der Getriebemotor 73 übernimmt also eine Doppelfunktion. Er dient zum einem als Niederhaltermotor dem Zweck die Niederhalterflächen 72 auf die für den Transport richtige Höhe zu bringen. Zum anderen dient er anschließend dem Zweck, die Druckfläche 44 des Schieber 42 auf eine für das Transportgut ideale Höhe zu verfahren. Der zusätzliche Freiheitsgrad des Schiebers gegenüber der Ausgestaltung der Fig. 1 und 2 geht daher nicht mit dem Bedarf eines weiteren Motors einher.

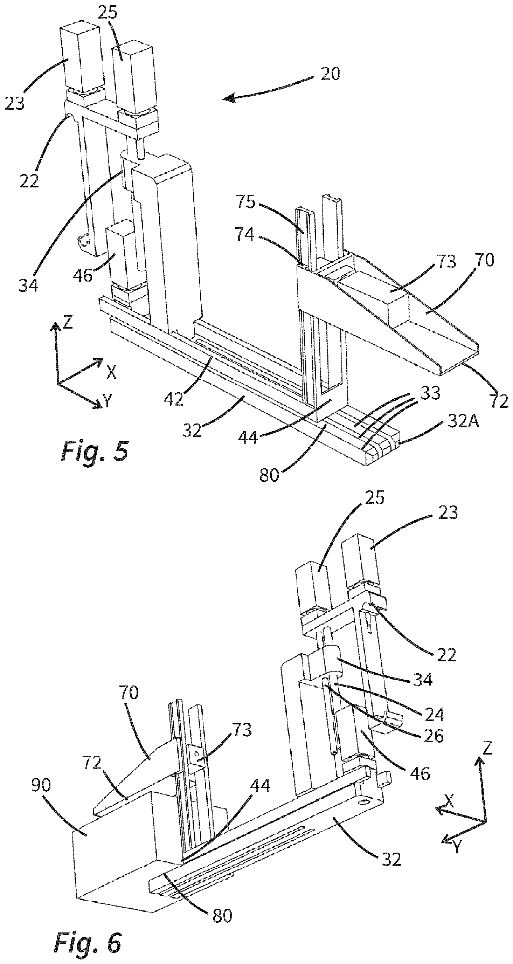

Bei der nicht von der Erfindung umfassten Ausgestaltung gemäß den Figuren 5 und 6 sind der Schieber 42 und der Niederhalter 70 wiederum kombiniert, wobei hier vorgesehen ist, dass der Schieber 42, ähnlich der ersten Ausgestaltung, keine variable Höhe gegenüber der Auflagefläche 80 aufweist, sondern bezogen auf die Hochrichtung Z in definierter Relativstellung verbleibt. Allerdings ist der Niederhalter 70 bei dieser Gestaltung am Schieber 42 vorgesehen, so dass er in Längsrichtung Y verfahrbar ist.

Hierdurch ergibt sich eine je nach Anwendungsfall vorteilhafte funktionale Möglichkeit. Der Niederhalter 70 kann das Transportgut 90 auch während des Ablegens noch gegen die Auflagefläche 80 drücken. So kann beispielsweise trotz abfallend angestellten Gabelzinken ein zuverlässiges Ablegen ermöglicht werden.

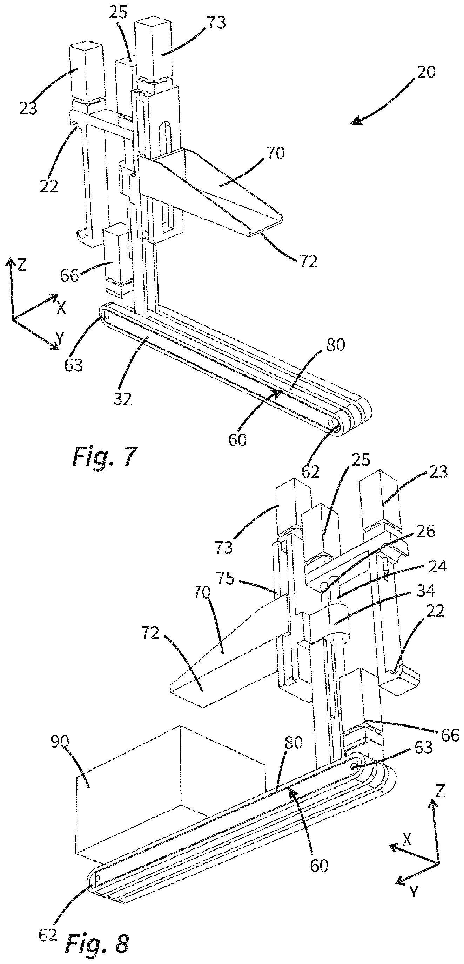

Die nicht von der Erfindung umfasste Ausgestaltung der Fig. 7 und 8 weist einen grundsätzlichen Unterschied zu den vorangegangenen Ausführungsbeispielen auf. Statt eines Schiebers 42 sind hier am Gabelzinken 32 drei Transportbänder 60 vorgesehen, deren Außenseite bzw. nach oben weisende Oberseite die Auflagefläche 80 für das Transportgut bilden und die am distalen und am proximalen Ende der Gabelzinke 32 mittels Umlenkrollen 62, 63 umgelenkt sind. Der Verlagerung von Transportgut 90 findet hier durch einen Antriebsmotor 66 statt, der die hinteren Umlenkrollen 63 antreibt.

Anhand der Figuren 9A bis 9E wird exemplarisch für einen Robotergreifer entsprechend den Figuren 1 und 2 der Ablauf an einer Palettierstation verdeutlicht.

Ausgangssituation ist, dass an einer Sammelstation 110 mehrere auf eine teilgepackte Zielpalette 120 hinzuzufügende Transportgüter 90 angeordnet sind. Diese liegen auf parallelen Stegen 112 der Sammelstation 110 auf.

Zwischen den parallelen Stegen 112 sind Einschubbereiche 114 freigelassen, die es gestatten, dass der Robotergreifer 10 mit den dreigeteilten Gabelzinken 32 in jeweils drei benachbarte Einschubbereiche 114 einfahren kann. Bevor dies geschieht, sind die Niederhalter 70 bereits auf in etwa richtige Höhe für die jeweiligen Transportgutstücke 90 verfahren worden.

Sobald der Robotergreifer 10 die Stellung der Fig. 9B eingenommen hat, hebt er durch eine Verlagerung des Robotergreifers 10 als Ganzes die vorliegend vier Transportgutstücke 90 an und senkt die Niederhalter 70 so ab, dass sie von oben leicht das jeweilige Transportgut 90 kraftbeaufschlagen, so dass diese gleichsam zwischen Auflagenflächen 80 und Niederhalterfläche 72 eingeklemmt sind.

Sobald dies geschehen ist, beginnt der Transport der Transportgutstücke 90 zur Zielpalette 120. Fig. 9C verdeutlicht die Konfiguration des Robotergreifers 10 unmittelbar nach Anheben der Transportgutstücke 90 von der Sammelstation 110. Zu diesem Zeitpunkt sind die Unterseiten der Transportgutstücke 90 auf den unterschiedlichen Gabelzinken 32 noch auf gleicher Höhe.

Bevor jedoch das Ablegen auf der Zielpalette erfolgt, werden die Gabeleinheiten 20 bzw. genauer deren Zinkeneinheiten 30 und mit ihnen die Gabelzinken 32 in Hochrichtung Z verfahren, um bereits eine Relativposition zueinander ähnlicher der Zielpalette 120 aufzuweisen. Da der Niederhalter 70 mittels des Niederhaltermotors relativ zur Auflagefläche verfahrbar ist, bedarf es in dieser Phase hier keiner separaten Bewegung. Vielmehr wird der Niederhalter 70 gemeinsam mit der gesamten Zinkeneinheit 30 in Hochrichtung Z verfahren.

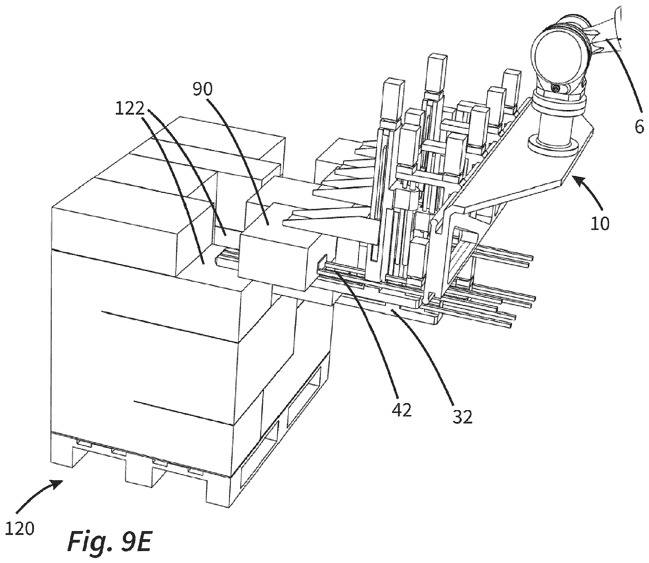

Fig. 9E zeigt, dass der Robotergreifer zum Abschluss des Transportgangs an die teilgepackte Zielpalette 120 herangefahren wird und die Transportgutstücke knapp oberhalb ihrer jeweiligen Zielposition positioniert. Es folgt eine vorzugsweise zumindest phasenweise überlagerte Bewegung, im Rahmen derer der Robotergreifer als Ganzes bezogen auf Fig. 9E nach rechts verfahren wird, während die Schieber 42 in stärkerem Maße nach links verfahren werden. Die Transportgüter 90 werden also quasi von den Gabelzinken 32 heruntergeschoben, während die Gabelzinken selbst gemeinsam mit dem Robotergreifer als Ganzem herausgezogen wird. Die Transportgutstücke erreichen hierdurch gleichzeitig ihre Zielposition.

## Patentansprüche

1. Robotergreifer (10) zum Ergreifen, Transportieren und Ablegen von Transportgütern (90) mit den folgenden Merkmalen:
a. der Robotergreifer (10) verfügt über eine Greiferbasis (12) mit einer Kopplungseinrichtung (16) zur Anbringung an einem Roboterarm (8), und
b. der Robotergreifer (10) verfügt über mindestens zwei Gabeleinheiten (20), und
c. die Gabeleinheiten (20) verfügen jeweils über eine Gabelzinke (32), wobei sich die Gabelzinken (32) in einer Längsrichtung (Y) parallel zueinander von der Greiferbasis (12) aus erstrecken und bezogen auf diese Längsrichtung (Y) ortsfest zur Greiferbasis (12) vorgesehen sind, und
d. an den Gabelzinken (32) sind Auflageflächen (80) zur unmittelbaren Auflage der Transportgüter (90) vorgesehen, und
e. die mindestens zwei Gabelzinken (32) sind unabhängig voneinander gegenüber der Greiferbasis (12) in einer Hochrichtung (Z) verfahrbar, und
f. an den mindestens zwei Gabeleinheiten (20) ist jeweils in Hochrichtung (Z) oberhalb der jeweiligen Gabelzinke ein Schieber (42) mit einer in Längsrichtung (Y) zu einem distalen Ende (32A) derjeweiligen Gabelzinke (32) weisenden Druckfläche (44) vorgesehen, und
g. die mindestens zwei Schieber (42) sind unabhängig voneinander in Längsrichtung (Y) verlagerbar.
**gekennzeichnet durch** das folgende Merkmal:
h. jede Gabeleinheit (20) weist oberhalb der Auflagefläche (80) einen in Hochrichtung (Z) gegenüber der Gabelzinke (32) verlagerbaren Niederhalter (70) auf, der über eine in Richtung der Gabelzinke (32) weisende Niederhalterfläche (72) verfügt, wobei der Schieber (42) mittels einer in Längsrichtung (Y) ausgerichteten Führung (78) am Niederhalter (70) geführt in Längsrichtung (Y) verlagerbar, so dass der Schieber (42) und Niederhalterfläche (72) gemeinsam in Hochrichtung (Z) verlagerbar sind, die Niederhalterfläche (72) in Längsrichtung (Y) ortsfest zur Greiferbasis (12) angeordnet ist und der Schieber gegenüber der Niederhalterfläche in Längsrichtung (Y) verlagerbar ist.

2. Robotergreifer (10) nach Anspruch 1 mit einem der folgenden zusätzlichen Merkmale:
a. jeder Gabeleinheit (20) ist eine bezogen auf die Hochrichtung (Z) und die Längsrichtung (Y) zur Greiferbasis (12) ortsfest angeordnete Führungsschiene (24) zugeordnet, entlang derer ein Führungsschlitten (34) der Gabeleinheit (20) in Hochrichtung (Z) verfahrbar ist, oder
b. jeder Gabeleinheit ist eine ortsfest zur Gabelzinke angeordnete Führungsschiene zugeordnet, die in einer bezogen auf die Hochrichtung (Z) und die Längsrichtung (Y) zur Greiferbasis ortsfest angeordneten Führungseinrichtung geführt ist und die gemeinsam mit der Gabelzinke in Hochrichtung (Z) gegenüber der Greiferbasis verfahrbar ist.

3. Robotergreifer (10) nach einem der vorstehenden Ansprüche mit dem folgenden zusätzlichen Merkmal:
a. es sind mindestens drei Gabeleinheiten (20) vorgesehen, deren Gabelzinken (32) unabhängigvoneinander gegenüber dem Greiferbasis in Hochrichtung (Z) verfahrbarsind.

4. Robotergreifer (10) nach einem der vorstehenden Ansprüche mit dem folgenden zusätzlichen Merkmal:
a. die mindestens zwei Gabeleinheiten (20) sind in einer Querrichtung (X) gegeneinander verfahrbar.

5. Robotergreifer (10) nach einem der vorstehenden Ansprüche mit dem folgenden zusätzlichen Merkmal:
a. die Gabelzinken (32) weisen in Längsrichtung (Y) erstreckte Durchbrechungen (36) auf, durch die die jeweilige Gabelzinke (32) der Länge nach in mindestens zwei Zinkenhälften (33) geteilt ist.

6. Palettierstation (100) zum Verladen von Transportgütern (90) auf eine Palette mit den folgenden Merkmalen:
a. die Palettierstation (100) umfasst einen Sammelstation (110), auf der Transportgüter (90) für die anschließende Verbringung auf eine Zielpalette (120) gesammelt werden, und
b. die Palettierstation (100) umfasst die Zielpalette (120), auf der die Transportgüter (90) bestimmungsgemäß abzulegen sind, und
c. die Palettierstation (100) umfasst einen Roboter (6) zum Transport der Transportgüter (90) von der Sammelstation (110) zur Zielpalette (120), wobei der Roboter (6) mit einem Robotergreifer (10) nach einem der vorstehenden Ansprüche ausgebildet ist.

7. Verfahren zum Betrieb eines Robotergreifers (10) nach einem der Ansprüche 1 bis 5 mit den Schritten:
a. der Robotergreifer (10) fährt mit mindestens zwei Gabelzinken (32) unter mindestens zwei Transportgutstücke (90), und
b. der Robotergreifer (10) hebt die Transportgutstücke (90) gemeinsam an, und
c. mindestens eine Gabelzinke (32) wird in Hochrichtung (Z) gegenüber der Greiferbasis (12) verlagert, so dass die Gabelzinken (32) anschließend relativ zur Greiferbasis (12) auf unterschiedlicher Höhe angeordnet sind, und
d. die mindestens zwei Transportgutstücke (90) werden auf Zielflächen (122) unterschiedlicher Höhe von den Gabelzinken (32) abgeladen.

8. Verfahren nach Anspruch 7 mit dem folgenden zusätzlichen Merkmal:
a. zum Abladen der Transportgutstücke (90) wird der Robotergreifer (10) als Ganzes in Längsrichtung (Y) in Richtung eines proximalen Endes der Gabelzinken (32) verlagert, während zeitgleich mittels der Schieber (42) die Transportgutstücke (90) relativ zu ihren jeweiligen Gabelzinken (32) in Richtung des distalen Endes (32A) der Gabelzinken (32) verlagert werden.

## Claims

1. Robotic gripper (10) for gripping, transporting and depositing transported goods (90), having the following features:
a) the robotic gripper (10) possesses a gripper base (12) having a coupling device (16) for attaching to a robotic arm (8); and
b) the robotic gripper (10) possesses at least two fork units (20); and
c) the fork units (20) possess in each case one fork prong (32), wherein the fork prongs (32) in a longitudinal direction (Y) extend in a mutually parallel manner from the gripper base (12), and in terms of this longitudinal direction (Y) are provided to be locationally fixed in relation to the gripper base (12); and
d) bearing faces (80) for the transported goods (90) to directly bear thereon are provided on the fork prongs (32); and
e) the at least two fork prongs (32) are displaceable in a height direction (Z) in an independent manner in relation to the gripper base (12); and
f) a slide (42) having a compression face (44), which in the longitudinal direction (Y) points towards a distal end (32A) of the respective fork prong (32), is in each case provided on the at least two fork units (20) so as to be above the respective fork prong in the height direction (Z); and
g) the at least two slides (42) in the longitudinal direction (Y) are displaceable in an independent manner,
**characterized by** the following feature:
h) each fork unit (20), above the bearing face (80), has a holding-down device (70) which is displaceable in the height direction (Z) in relation to the fork prong (32) and which possesses a holding-down device face (72) that points in the direction of the fork prong (32), wherein the slide (42) by means of a guide (78) on the holding-down device (70) that is aligned in the longitudinal direction (Y) is displaceable in a guided manner in the longitudinal direction (Y) such that the slide (42) and the holding-down device face (72) are conjointly displaceable in the height direction (Z), the holding-down device face (72) in the longitudinal direction (Y) is disposed so as to be locationally fixed in relation to the gripper base (12), and the slide is displaceable in the longitudinal direction (Y) in relation to the holding-down device face.

2. Robotic gripper (10) according to Claim 1, having one of the following additional features:
a) each fork unit (20) is assigned one guide rail (24) which in terms of the height direction (Z) and the longitudinal direction (Y) is disposed so as to be locationally fixed in relation to the gripper base (12), a sliding guide (34) of the fork unit (20) being displaceable in the height direction (Z) along said guide rail (24); or
b) each fork unit is assigned one guide rail which is disposed so as to be locationally fixed with respect to the fork prong and is guided in a guiding installation that, in terms of the height direction (Z) and the longitudinal direction (Y), is disposed so as to be locationally fixed with respect to the gripper base, which guide rail, conjointly with the fork prong, is displaceable in the height direction (Z) in relation to the gripper base.

3. Robotic gripper (10) according to either of the preceding claims, having the following additional feature:
a) at least three fork units (20) are provided, the fork prongs (32) of the latter in the height direction (Z) being displaceable in a mutually independent manner in relation to the gripper base.

4. Robotic gripper (10) according to one of the preceding claims, having the following additional feature:
a) the at least two fork units (20) in a transverse direction (X) are displaceable in relation to one another.

5. Robotic gripper (10) according to one of the preceding claims, having the following additional feature:
a) the fork prongs (32) have cutouts (36) which extend in the longitudinal direction (Y) and by way of which the respective fork prong (32) is longitudinally divided into at least two prong halves (33).

6. Palletizing station (100) for loading transported goods (90) onto a pallet, having the following features:
a) the palletizing station (100) comprises a consolidation station (110) at which transported goods (90) are consolidated so as to be subsequently moved to a target pallet (120); and
b) the palletizing station (100) comprises the target pallet (120) onto which the transported goods (90) are to be deposited according to the intended use; and
c) the palletizing station (100) comprises a robot (6) for transporting the transported goods (90) from the consolidation station (110) to the target pallet (120), wherein the robot (6) is configured having a robotic gripper (10) according to one of the preceding claims.

7. Method for operating a robotic gripper (10) according to one of Claims 1 to 5, comprising the following steps:
a) the robotic gripper (10) by way of at least two fork prongs (32) moves below at least two items of transported goods (90); and
b) the robotic gripper (10) lifts the transported goods (90) conjointly; and
c) at least one fork prong (32) in the height direction (Z) is displaced in relation to the gripper base (12) such that the fork prongs (32) relative to the gripper base (12) are subsequently disposed at dissimilar heights; and
d) the at least two items of transported goods (90) are unloaded from the fork prongs (32) onto target surfaces (122) at dissimilar heights.

8. Method according to Claim 7, having the following additional feature:
a) in order for the items of transported goods (90) to be unloaded, the robotic gripper (10) in its entirety is moved in the longitudinal direction (Y) in the direction of a proximal end of the fork prongs (32), while the items of transported goods (90) by means of the slides (42) are simultaneously displaced relative to the respective fork prongs (32) of said items of transported goods (90) in the direction of the distal end (32A) of the fork prongs (32).

## Revendications

1. Manipulateur de robot (10) pour la saisie, le transport et le dépôt d'articles à transporter (90), présentant les caractéristiques suivantes :
a. le manipulateur de robot (10) dispose d'une base de manipulateur (12) munie d'un appareil de couplage (16) pour la disposition sur un bras de robot (8), et
b. le manipulateur de robot (10) dispose d'au moins deux unités de fourche (20), et
c. les unités de fourche (20) disposent chacune d'un bras de fourche (32), les bras de fourche (32) s'étendant dans une direction longitudinale (Y) en parallèle les uns des autres à partir de la base de manipulateur (12) et étant prévus pour être fixes par rapport à la base de manipulateur (12) relativement à cette direction longitudinale (Y), et
d. des surfaces d'appui (80) sont prévues sur les bras de fourche (32) pour l'appui direct des articles à transporter (90), et
e. les au moins deux bras de fourche (32) peuvent être déplacés indépendamment l'un de l'autre par rapport à la base de manipulateur (12) dans une direction verticale (Z), et
f. un coulisseau (42), muni d'une surface de pression (44) orientée dans la direction longitudinale (Y) vers une extrémité distale (32A) du bras de fourche respectif (32), est prévu à chaque fois dans la direction verticale (Z) au-dessus du bras de fourche respectif sur les au moins deux unités de fourche (20), et
g. les au moins deux coulisseaux (42) peuvent être déplacés indépendamment l'un de l'autre dans la direction longitudinale (Y),
**caractérisé par** la caractéristique suivante :
h. chaque unité de fourche (20) comprend, au-dessus de la surface d'appui (80), un serre-flanc (70) pouvant être déplacé dans la direction verticale (Z) par rapport au bras de fourche (32), qui dispose d'une surface de serre-flanc (72) orientée en direction du bras de fourche (32), le coulisseau (42) pouvant être déplacé dans la direction longitudinale (Y) de manière guidée sur le serre-flanc (70) au moyen d'un guide (78) orienté dans la direction longitudinale (Y), de telle sorte que le coulisseau (42) et la surface de serre-flanc (72) puissent être déplacés ensemble dans la direction verticale (Z), la surface de serre-flanc (72) étant agencée de manière fixe par rapport à la base de manipulateur (12) dans la direction longitudinale (Y) et le coulisseau pouvant être déplacé dans la direction longitudinale (Y) par rapport à la surface de serre-flanc.

2. Manipulateur de robot (10) selon la revendication 1, présentant une des caractéristiques supplémentaires suivantes :
a. chaque unité de fourche (20) est associée à un rail de guidage (24) agencé de manière fixe par rapport à la base de manipulateur (12) relativement à la direction verticale (Z) et à la direction longitudinale (Y), le long duquel un chariot de guidage (34) de l'unité de fourche (20) peut être déplacé dans la direction verticale (Z), ou
b. chaque unité de fourche est associée à un rail de guidage agencé de manière fixe par rapport au bras de fourche, qui est guidé dans un appareil de guidage agencé de manière fixe par rapport à la base de manipulateur relativement à la direction verticale (Z) et à la direction longitudinale (Y), et qui peut être déplacé conjointement avec le bras de fourche dans la direction verticale (Z) par rapport à la base de manipulateur.

3. Manipulateur de robot (10) selon l'une quelconque des revendications précédentes, présentant la caractéristique supplémentaire suivante :
a. au moins trois unités de fourche (20) sont prévues, dont les bras de fourche (32) peuvent être déplacés indépendamment les uns des autres par rapport à la base de manipulateur dans la direction verticale (Z) .

4. Manipulateur de robot (10) selon l'une quelconque des revendications précédentes, présentant la caractéristique supplémentaire suivante :
a. les au moins deux unités de fourche (20) peuvent être déplacées l'une par rapport à l'autre dans une direction transversale (X).

5. Manipulateur de robot (10) selon l'une quelconque des revendications précédentes, présentant la caractéristique supplémentaire suivante :
a. les bras de fourche (32) présentent dans la direction longitudinale (Y) des percements étirés (36), à travers lesquels le bras de fourche respectif (32) est divisé sur la longueur en au moins deux moitiés de bras (33).

6. Station de mise sur palette (100) pour le chargement d'articles à transporter (90) sur une palette, présentant les caractéristiques suivantes :
a. la station de mise sur palette (100) comprend une station de collecte (110), sur laquelle des articles à transporter (90) sont collectés pour le transfert ultérieur sur une palette cible (120), et
b. la station de mise sur palette (100) comprend la palette cible (120), sur laquelle les articles à transporter (90) doivent être placés de manière conforme, et
c. la station de mise sur palette (100) comprend un robot (6) pour le transport des articles à transporter (90) depuis la station de collecte (110) jusqu'à la palette cible (120), le robot (6) étant configuré avec un manipulateur de robot (10) selon l'une quelconque des revendications précédentes.

7. Procédé d'exploitation d'un manipulateur de robot (10) selon l'une quelconque des revendications 1 à 5, comprenant les étapes suivantes :
a. le manipulateur de robot (10) est conduit avec au moins deux bras de fourche (32) sous au moins deux articles à transporter (90), et
b. le manipulateur de robot (10) soulève conjointement les articles à transporter (90), et
c. au moins un bras de fourche (32) est déplacé dans la direction verticale (Z) par rapport à la base de manipulateur (12), de telle sorte que les bras de fourche (32) soient ensuite agencés à une hauteur différente par rapport à la base de manipulateur (12), et
d. les au moins deux articles à transporter (90) sont déchargés des bras de fourche (32) sur des surfaces cibles (122) de hauteur différente.

8. Procédé selon la revendication 7, présentant la caractéristique supplémentaire suivante :
a. pour le déchargement des articles à transporter (90), le manipulateur de robot (10) est déplacé dans son ensemble dans la direction longitudinale (Y) en direction d'une extrémité proximale des bras de fourche (32), tandis que simultanément, au moyen du coulisseau (42), les articles à transporter (90) sont déplacés par rapport à leurs bras de fourche respectifs (32) en direction de l'extrémité distale (32A) des bras de fourche (32).
